# EUROPEAN PATENT APPLICATION

(11) **EP 3 366 656 A1**
(43) Date of publication of application: **29.08.2018**
(21) Application number: 16857137.0
(22) Date of filing: 12.07.2016
(51) Int. Cl.: C03B 33/095, B23K 26/53

(54) **METHOD FOR CUTTING AND DEVICE FOR CUTTING TUBE GLASS, AND METHOD FOR MANUFACTURING TUBE GLASS PRODUCT**

(30) Priority: 20.10.2015 JP 2015206324
(71) Applicant: Nippon Electric Glass Co., Ltd., Otsu-shi, Shiga 520-8639 (JP)
(72) Inventor: WADA Masanori, Otsu-shi Shiga 520-8639 (JP); IWASAKI Takanori, Otsu-shi Shiga 520-8639 (JP)
(74) Representative: Tetzner, Michael
(86) International application number: PCT/JP2016/070540
(87) International publication number: WO 2017/068819

(57) **Abstract**

A cutting method for a tube glass (G2) includes a crack forming step of forming a crack (C) in an inside of the tube glass (G2) through multiphoton absorption that occurs in an irradiation region of laser light (L) by irradiating in the inside of the tube glass (G2) with the laser light (L) having a focal point adjusted to the inside of the tube glass (G2). The crack forming step includes moving a position of the focal point of the laser light from an inner surface (G2b) side to an outer surface (G2a) side in the inside of the tube glass (G2), to thereby cause the crack (C) to propagate in the inside of the tube glass (G2).

## Description

### Technical Field

The present invention relates to a cutting method for a tube glass, a cutting device for a tube glass, and a manufacturing method for a tube glass product.

### Background Art

A tube glass product used in, for example, a medical ampule, a medical syringe, and a fluorescent tube for lighting is formed by various methods such as a Danner method and a down-draw method. Description is made of the overview of the Danner method below as an example.

When a tube glass product is manufactured by the Danner method, molten glass is first supplied to a rotatable sleeve arranged in a muffle furnace. The supplied molten glass is formed into a tube shape while being wound on an inside of the sleeve. The molten glass formed into a tube shape is pulled out from a distal end of the sleeve by a tube drawing device (pulling device) to form a tube glass continuously (for example, see Patent Literature 1).

The tube glass having been continuously formed (hereinafter referred to as "continuous tube glass") is subjected to steps of rough cutting and re-cutting to be formed into a tube glass product having a predetermined length. In the rough cutting step, the continuous tube glass that is conveyed is cut by a rough cutting device to obtain a tube glass having a predetermined length (for example, see paragraph [0003] of Patent Literature 2).

In the re-cutting step, the tube glass having been obtained through the rough cutting step is conveyed by a conveyor while being rotated, and preset cut portions of the tube glass are heated by a burner. Next, while the tube glass is rotated, scratches are formed at the heated portions by a cutting blade such as a diamond wheel of a re-cutting device. Specifically, the cutting blade is brought into contact with the tube glass under a state in which the cutting blade is cooled by water or the like, and thermal shock resulting therefrom causes cracks having an origin at the scratches to be formed on an outer peripheral surface of the tube glass. Both end portions of the tube glass are cut by propagation of the cracks. After that, the end portions of the tube glass are finished by mouth-burning processing. With the steps described above, a tube glass product having a predetermined length is completed (see paragraph [0005] of Patent Literature 2).

### Citation List

Patent Literature 1: JP 2013-159532 A
Patent Literature 2: JP 2013-147405 A

### Summary of Invention

### Technical Problem

In the above-mentioned re-cutting step, the scratches are formed on the outer peripheral surface of the tube glass by the cutting blade, and the thermal shock causes the scratches to propagate as cracks, to thereby cut the tube glass. Therefore, a cutting accuracy for a fracture surface is low, and long time is required for the mouth-burning processing for finishing the fracture surface, resulting in degradation of production efficiency. Further, in the method involving forming the scratches on the outer peripheral surface of the tube glass, glass powder is inevitably generated. Thus, a step of cleaning the inner peripheral surface of the tube glass to which the glass powder adheres is also separately required after the cutting.

The present invention has been made in view of the above-mentioned circumstances, and has an object to provide a cutting method and a cutting device as well as a manufacturing method for a tube glass product, which are capable of efficiently cutting a tube glass by preventing generation of glass fine powder on a cut surface.

### Solution to Problem

In order to solve the above-mentioned problem, according to one embodiment of the present invention, there is provided a cutting method for a tube glass, comprising a crack forming step of forming a crack in an inside of the tube glass through multiphoton absorption that occurs in an irradiation region of laser light by irradiating the inside of the tube glass with the laser light having a focal point adjusted to the inside of the tube glass. Further, the crack forming step comprises moving a position of the focal point of the laser light from an inner surface side to an outer surface side in the inside of the tube glass, to thereby cause the crack to propagate in the inside of the tube glass.

According to the cutting method for a tube glass described above, the crack is formed in the inside of the tube glass through the multiphoton absorption that occurs at the time of irradiation with the laser light, and the crack is caused to propagate in the inside of the tube glass, thereby being capable of cutting the tube glass. When the crack is to be caused to propagate, the position of the focal point of the laser light is moved from the inner surface side to the outer surface side of the tube glass in the inside of the tube glass. In a case in which the crack is to be caused to propagate by moving the position of the focal point from the outer surface side to the inner surface side, the crack that is formed in advance at the position on the outer surface side hinders transmission of the laser light when another crack is to be formed later at the position on the inner surface side, with the result that propagation of the crack becomes more difficult. In contrast, according to the present invention, the position of the focal point of the laser light is moved from the inner surface side to the outer surface side. Therefore, the crack is suitably caused to propagate with respect to a thickness direction of the tube glass, thereby being capable of reliably cutting the tube glass . Further, according to this method, the crack is generated in the inside of the tube glass . Therefore, unlike the related-art method, the tube glass can be cut even without formation of the scratches on the outer surface of the tube glass. Thus, circumstances of related arts such as generation of glass powder at the time of cutting the tube glass can be reliably prevented. With this, the labor of removing the glass powder by cleaning can be omitted, thereby being capable of reducing the number of required steps. Further, when the cut surface is formed as described above, as compared to the case in which the crack is forcibly generated and caused to propagate by cleaving or the like, the occurrence of cracking, chipping, and the like can be prevented to the extent possible to control the properties of the cut surface with relatively high accuracy, with the result that the satisfactory cut surface can be obtained stably. Thus, occurrence of defects caused by cracking and chipping can be prevented, and time required for mouth-burning processing for end portions of the tube glass can be significantly shortened, thereby being capable of efficiently manufacturing a tube glass product.

Further, in the cutting method for a tube glass according to the present invention, it is desired that the position of the focal point of the laser light be moved from the inner surface side to the outer surface side in the inside of the tube glass while rotating the tube glass about an axial center of the tube glass, to thereby cause the crack to propagate in the inside of the tube glass. Through formation of the crack by the laser light while rotating the tube glass about the axial center, a crack with equal quality can be formed throughout an entire circumference of the tube glass . With this, the tube glass can be cut with high accuracy.

Further, in the cutting method for a tube glass according to the present invention, it is desired that the laser light comprise a pulse laser. With this, the multiphoton absorption phenomenon can be caused effectively in the inside of the tube glass.

Further, in the cutting method for a tube glass according to the present invention, it is desired that the crack be annularly formed along with rotation of the tube glass. As described above, when the crack caused by the multiphoton absorption is annularly formed in accordance with rotation of the tube glass, a uniform crack can be formed throughout the entire circumference of the tube glass, thereby being capable of cutting the tube glass with high accuracy.

Further, in the cutting method for a tube glass according to the present invention, the crack may be linearly formed along the thickness direction of the tube glass. When the cracks each having a linear shape are formed successively while rotating the tube glass, the cracks each having a linear shape can be formed throughout the entire circumference of the tube glass. With this, the tube glass can be cut by only one rotation of the tube glass, thereby being capable of cutting the tube glass at high speed.

In order to solve the above-mentioned problem, according to one embodiment of the present invention, there is provided a cutting device for a tube glass, comprising a crack forming device which is configured to form a crack in an inside of the tube glass through multiphoton absorption that occurs in an irradiation region of laser light by irradiating the inside of the tube glass with the laser light having a focal point adjusted to the inside of the tube glass. Further, the crack forming device is configured to move a position of the focal point of the laser light from an inner surface side to an outer surface side in the inside of the tube glass, to thereby cause the crack to propagate in the inside of the tube glass.

With the cutting device for a tube glass described above, the crack is formed in the inside of the tube glass through the multiphoton absorption that occurs at the time of irradiation with the laser light from the crack forming device, and the crack is caused to propagate in the inside of the tube glass, thereby being capable of cutting the tube glass. When the crack is to be caused to propagate, the position of the focal point of the laser light is moved from the inner surface side to the outer surface side of the tube glass in the inside of the tube glass. In the case in which the crack is to be caused to propagate by moving the position of the focal point from the outer surface side to the inner surface side, the crack that is formed in advance at the position on the outer surface side hinders transmission of the laser light when another crack is to be formed later at the position on the inner surface side, with the result that propagation of the crack becomes more difficult. In contrast, according to the present invention, the position of the focal point of the laser light is moved from the inner surface side to the outer surface side. Therefore, the crack is suitably caused to propagate with respect to the thickness direction of the tube glass, thereby being capable of reliably cutting the tube glass. Further, the crack is generated in the inside of the tube glass. Therefore, unlike the related-art method, the tube glass can be cut even without formation of the scratches on the outer surface of the tube glass. Thus, circumstances of related arts such as generation of glass powder at the time of cutting the tube glass can be reliably prevented. With this, the labor of removing the glass powder by cleaning can be omitted, thereby being capable of reducing the number of required steps. Further, when the cut surface is formed as described above, as compared to the case in which the crack is forcibly generated and caused to propagate by cleaving or the like, the occurrence of cracking, chipping, and the like can be prevented to the extent possible to control the properties of the cut surface with relatively high accuracy, with the result that the satisfactory cut surface can be obtained stably. Thus, the occurrence of defects caused by cracking and chipping can be prevented, and the time required for the mouth-burning processing for the end portions of the tube glass can be significantly shortened, thereby being capable of efficiently manufacturing the tube glass product.

Further, it is desired that the cutting device for a tube glass according to the present invention further comprise a rotational drive device which is configured to rotate the tube glass . Through formation of the crack by the laser light while rotating the tube glass about the axial center by the rotational drive device, a crack with equal quality can be formed throughout the entire circumference of the tube glass. With this, the cutting device can cut the tube glass with high accuracy.

Further, in the cutting device for a tube glass according to the present invention, it is desired that the laser light comprise a pulse laser. With this, the multiphoton absorption phenomenon can be caused effectively in the inside of the tube glass.

In order to solve the above-mentioned problem, according to one embodiment of the present invention, there is provided a manufacturing method for a tube glass product, comprising: a first cutting step of cutting a continuous tube glass formed by tube drawing; and a second cutting step of cutting an end portion of the tube glass which is formed after the first cutting step. The second cutting step comprises a crack forming step of forming a crack in an inside of the tube glass through multiphoton absorption that occurs in an irradiation region of laser light by irradiating the inside of the tube glass with the laser light having a focal point adjusted to the inside of the tube glass. The crack forming step comprises moving a position of the focal point of the laser light from an inner surface side to an outer surface side in the inside of the tube glass while rotating the tube glass about an axial center of the tube glass, to thereby cause the crack to propagate in the inside of the tube glass.

With the manufacturing method for a tube glass product described above, the tube glass is formed by cutting the continuous tube glass in the first cutting step. The crack is formed in the inside of the tube glass through the multiphoton absorption that occurs at the time of irradiation of the laser light, and the crack is caused to propagate in the inside of the tube glass to cut the end portion of the tube glass, thereby being capable of manufacturing the tube glass product having a predetermined length. When the crack is to be caused to propagate, the position of the focal point of the laser light is moved from the inner surface side to the outer surface side of the tube glass in the inside of the tube glass. In the case in which the crack is to be caused to propagate by moving the position of the focal point from the outer surface side to the inner surface side, the crack that is formed in advance at the position on the outer surface side hinders transmission of the laser light when another crack is to be formed later at the position on the inner surface side, with the result that propagation of the crack becomes more difficult. In contrast, according to the present invention, the position of the focal point of the laser light is moved from the inner surface side to the outer surface side. Therefore, the crack is suitably caused to propagate with respect to the thickness direction of the tube glass. Further, the crack is caused to propagate while rotating the tube glass, and thus a crack with equal quality can be formed throughout the entire circumference of the tube glass. Further, the crack is generated in the inside of the tube glass. Therefore, unlike the related-art method, the tube glass can be cut even without formation of the scratches on the outer surface of the tube glass. Thus, circumstances of related arts such as generation of glass powder at the time of cutting the tube glass can be reliably prevented. With this, the labor of removing the glass powder by cleaning can be omitted, thereby being capable of reducing the number of required steps. Further, when the cut surface is formed as described above, as compared to the case in which the crack is forcibly generated and caused to propagate by cleaving or the like, the occurrence of cracking, chipping, and the like can be prevented to the extent possible to control the properties of the cut surface with relatively high accuracy, with the result that the satisfactory cut surface can be obtained stably. Thus, the occurrence of defects caused by cracking and chipping can be prevented, and the time required for the mouth-burning processing for the end portions of the tube glass can be significantly shortened, thereby being capable of efficiently manufacturing the tube glass product.

### Advantageous Effects of Invention

According to the present invention, the tube glass can be efficiently cut by preventing generation of glass fine powder.

### Brief Description of Drawings

FIG. 1 is a side view for illustrating a manufacturing apparatus for a tube glass product.
FIG. 2 is a plan view for illustrating a first cutting device in the manufacturing apparatus for a tube glass.
FIG. 3 is an enlarged perspective view of a main portion of a continuous tube glass, for illustrating a scanning mode of laser light in the first cutting device.
FIG. 4 is an enlarged plan view of a main portion of the continuous tube glass, for illustrating an irradiation mode of the laser light in the first cutting device.
FIG. 5 is a sectional view of a main portion of the continuous tube glass immediately after an inner crack region is formed.
FIG. 6 is a sectional view of a main portion of the continuous tube glass immediately after cracks in the inner crack region start propagating in a circumferential direction of the continuous tube glass.
FIG. 7 is a sectional view of a main portion of the continuous tube glass, for illustrating a state in which the cracks in the inner crack region are in the process of propagating in the circumferential direction of the continuous tube glass.
FIG. 8 is a front view of an end surface of the continuous tube glass, for illustrating a state after the cracks in the inner crack region propagate throughout an entire circumference of the continuous tube glass.
FIG. 9 is a plan view of a main portion of the manufacturing apparatus illustrated in FIG. 1, and is a view for illustrating a state immediately after the continuous tube glass is cut.
FIG. 10 is a side view for schematically illustrating a second cutting device of the manufacturing apparatus illustrated in FIG. 1.
FIG. 11 is a schematic plan view for illustrating the second cutting device.
FIG. 12 is a sectional view for illustrating the tube glass at the time of starting cutting.
FIG. 13 is a sectional view for illustrating the tube glass during cutting.
FIG. 14 is a sectional view for illustrating the tube glass during cutting.
FIG. 15 is a sectional view for illustrating the tube glass during cutting.
FIG. 16 is a sectional view for illustrating the tube glass at the time of starting cutting.
FIG. 17 is a sectional view for illustrating the tube glass during cutting.
FIG. 18 is a sectional view for illustrating the tube glass during cutting.
FIG. 19 is a sectional view for illustrating the tube glass at the time of terminating cutting.

### Description of Embodiments

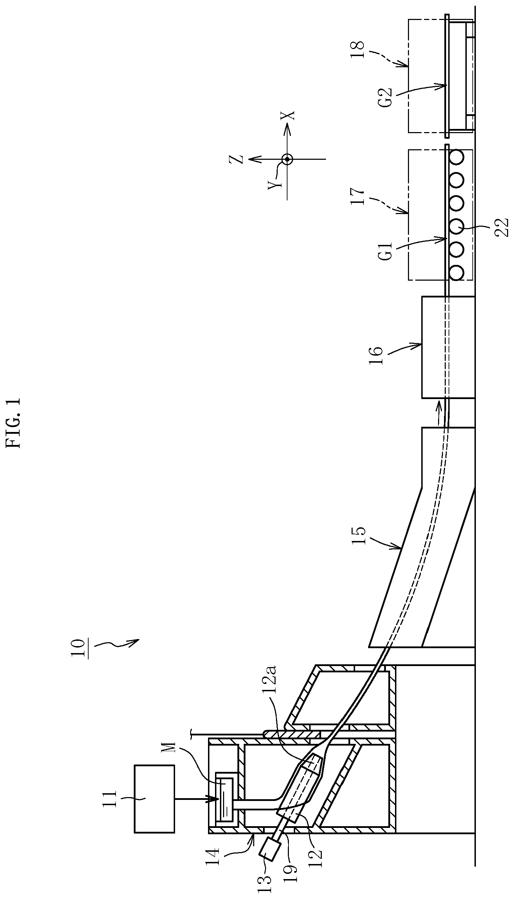

Now, description is made of an embodiment of the present invention with reference to the drawings. FIG. 1 to FIG. 19 are illustrations of a cutting method for a tube glass, a cutting device for a tube glass, and a manufacturing method for a tube glass product according to one embodiment of the present invention.

FIG. 1 is an illustration of one example of a manufacturing apparatus 10 for a tube glass product to which the present invention is applicable. The manufacturing apparatus 10 is configured to form a continuous tube glass G1 by a Danner method, and mainly comprises a glass melting furnace 11, a sleeve 12, a drive device 13, a muffle furnace 14, an annealer 15, a tube drawing device 16, a cutting device (hereinafter referred to as "first cutting device") 17, and a cutting device (hereinafter referred to as "second cutting device") 18. The drive device 13 is configured to drive the sleeve 12 to rotate. The muffle furnace 14 is configured to accommodate the sleeve 12. The tube drawing device 16 is configured to subject the continuous tube glass G1 to tube drawing forming. The first cutting device 17 is configured to cut the continuous tube glass G1. The second cutting device 18 is configured to cut end portions of a tube glass G2 obtained by cutting the continuous tube glass G1.

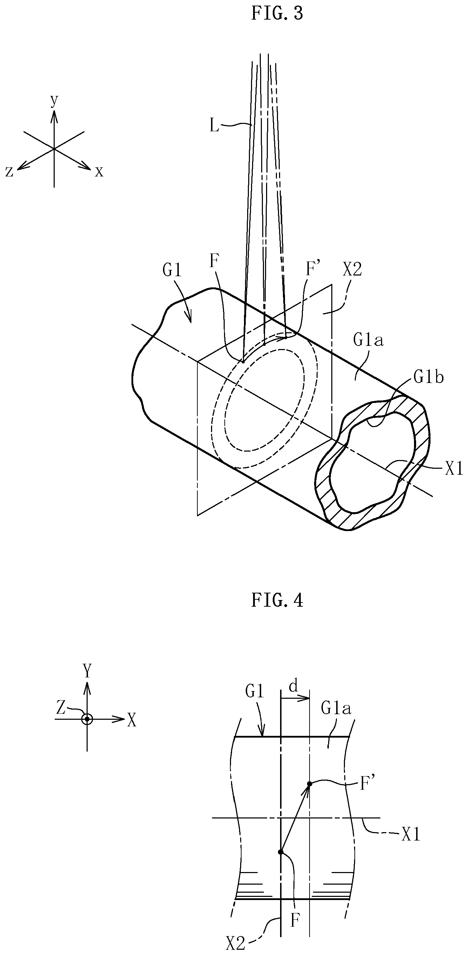

An XYZ coordinate system illustrated in FIG. 1 is a coordinate system on a fixed side. In this embodiment, a plane including an X-axis and a Y-axis is defined as a horizontal plane, and a direction along a Z-axis is defined as a vertical direction (the positive side of the Z-axis is defined as a top, and the negative side thereof is defined as a bottom) . Further, an xyz coordinate system illustrated in FIG. 3 is a coordinate system on a moving side (coordinate system on the continuous tube glass G1). In the same manner as in the XYZ coordinate system illustrated in, for example, FIG. 1, a plane including an x-axis and a y-axis is defined as a horizontal plane, and a direction along a z-axis is defined as a vertical direction.

The glass melting furnace 11 is configured to melt a glass raw material to generate a molten glass M. The molten glass M generated in the glass melting furnace 11 is supplied to the sleeve 12 in the muffle furnace 14.

The sleeve 12 is formed into a cylindrical shape through use of a refractory. The sleeve 12 is partially tapered, and is arranged so that a small-diameter-side end portion 12a of a tapered portion is directed obliquely downwardly. The sleeve 12 is connected to the drive device 13 through intermediation of a shaft 19. In this embodiment, when the sleeve 12 is driven to rotate by the drive device 13, the molten glass M supplied to the sleeve 12 can be wound into a cylindrical shape and be pultruded into a tube shape from the small-diameter-side end portion 12a.

As described above, the molten glass M pultruded into a tube shape is continuously pulled out of the muffle furnace 14 as the continuous tube glass G1 and is guided into the annealer 15.

The tube drawing device 16 is arranged on a downstream side of the annealer 15 and is configured to pull the continuous tube glass G1 having passed through the annealer 15 at a constant speed so that the continuous tube glass G1 can be conveyed to the first cutting device 17. Specifically, the continuous tube glass G1 aligned to a predetermined outer diameter can be supplied to the first cutting device 17 by pulling the continuous tube glass G1 in a downstream direction while sandwiching an upper portion and a lower portion of the continuous tube glass G1 between a pair of conveyance belts (not shown), to thereby subject the continuous tube glass G1 to tube drawing.

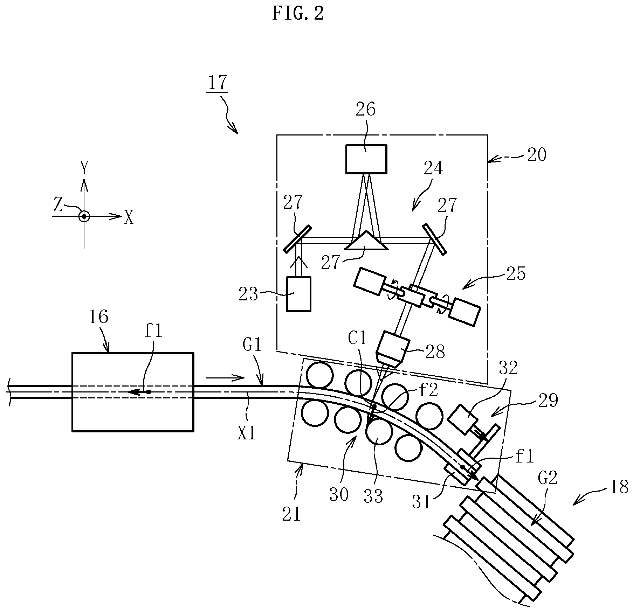

As illustrated in FIG. 2, the first cutting device 17 is configured to cut the continuous tube glass G1 to obtain the tube glass G2 having a predetermined length. The thickness of the tube glass G2 in this embodiment is set to, for example, from 0.5 mm to 2.0 mm. However, the thickness of the tube glass G2 is not limited thereto. The first cutting device 17 comprises an inner crack region forming device 20, a crack propagation device 21, and support portions 22 (see FIG. 1). The inner crack region forming device 20 is configured to form an inner crack region C1 in a portion of the continuous tube glass G1 in a circumferential direction of the continuous tube glass G1. The crack propagation device 21 is configured to cause cracks in the inner crack region C1 to propagate throughout an entire circumference of the continuous tube glass G1, by generating, in the continuous tube glass G1, a stress that urges propagation of the cracks. The support portions 22 are configured to support the continuous tube glass G1.

The inner crack region forming device 20 comprises a laser oscillator 23 and an optical system 24. The laser oscillator 23 is capable of oscillating predetermined laser light (for example, pico-second pulse laser light or sub-pico-second pulse laser light) L. The optical system 24 is configured to cause the laser light L oscillated from the laser oscillator 23 to be condensed and enter an inside of the continuous tube glass G1. In addition, in this embodiment, the inner crack region forming device 20 further comprises a scanning portion 25 and a focal point adjusting portion 26. The scanning portion 25 is arranged on a path of the optical system 24, and is configured to cause the laser light L to perform scanning in a predetermined mode as illustrated in FIG. 2. The focal point adjusting portion 26 is capable of adjusting a position of a focal point F of the laser light L in the inside of the continuous tube glass G1.

In this embodiment, the optical system 24 comprises a plurality of mirrors 27 and an objective lens 28. The objective lens 28 is configured to condense the laser light L transmitted through the plurality of mirrors 27 into the continuous tube glass G1.

The scanning portion 25 is formed of a Galvano mirror, for example, as illustrated in FIG. 2. The scanning portion 25 is constructed so as to cause the laser light L reflected from the mirrors 27 to perform scanning in a predetermined locus . For example, in this embodiment, as illustrated in FIG. 3, the scanning portion 25 is constructed so as to cause the laser light L to perform scanning linearly along the circumferential direction of the continuous tube glass G1 in such a manner that the focal point F is included in an imaginary cross section X2 orthogonal to a center line X1 of the continuous tube glass G1.

The scanning locus described above has a form in the case of being viewed in the coordinate system (xyz coordinate system illustrated in FIG. 3) based on the moving continuous tube glass G1. When the scanning locus is viewed in the coordinate system based on the fixed side, as illustrated in FIG. 4, the scanning form of the focal point F is set in the following manner . While the continuous tube glass G1 moves by a predetermined distance d in a direction along the center line X1, the focal point F moves by a distance indicated by the arrow in FIG. 3 in a direction along the circumferential direction and moves by the same distance as the moving distance d of the continuous tube glass G1 in the direction along the center line X1.

The focal point adjusting portion 26 comprises, for example, a spatial light phase modulator. Specifically, with the focal point adjusting portion 26, a spatial phase distribution of the laser light L can be modulated so that the position of the focal point F (more exactly, position in a thickness direction of the continuous tube glass G1) is adjusted with a phase hologram produced in advance in accordance with an irradiation direction of the laser light L controlled by the scanning portion 25. In this embodiment, as illustrated in FIG. 3, the position of the focal point F of the laser light L is adjusted so that the focal point F is positioned along the circumferential direction of the continuous tube glass G1 on an outer periphery side of the continuous tube glass G1 in the thickness direction thereof, that is, on a side closer to an outer surface (outer peripheral surface) G1a of the continuous tube glass G1.

In this embodiment, as illustrated in FIG. 2, the crack propagation device 21 comprises a tensile force applying portion 29 and a bending force applying portion 30. The tensile force applying portion 29 is configured to apply a tensile force f1 in the direction along the center line X1 of the continuous tube glass G1. The bending force applying portion 30 is configured to apply a bending force f2 to the continuous tube glass G1 so that the center line X1 of the continuous tube glass G1 is curved at a predetermined curvature.

In this case, for example, the tensile force applying portion 29 comprises a gripping portion 31 and a slide drive portion 32. The gripping portion 31 is configured to grip a downstream-side end portion of the continuous tube glass G1. The slide drive portion 32 is configured to move the gripping portion 31 in the direction along the center line X1. The slide drive portion 32 may be constructed so as to move the gripping portion 31 in synchronization with the continuous tube glass G1. In this case, the state in which the tensile force f1 is applied to the continuous tube glass G1 that is being moved along the center line X1 can be maintained for a certain time period (certain distance).

Further, the bending force applying portion 30 comprises a plurality of rollers 33 configured to sandwich both sides of the continuous tube glass G1 in a horizontal direction thereof. The positions of the continuous tube glass G1 supported (sandwiched) by the plurality of rollers 33 are set so that the center line X1 of the continuous tube glass G1 is curved at a predetermined curvature as the center line X1 is directed to the downstream side.

The support portions 22 may be a plurality of rollers which are arranged at predetermined intervals along a longitudinal direction of the continuous tube glass G1. However, the support portions 22 are not limited thereto . The support portions 22 support the continuous tube glass G1 from below so as to guide the continuous tube glass G1 in the longitudinal direction of the continuous tube glass G1.

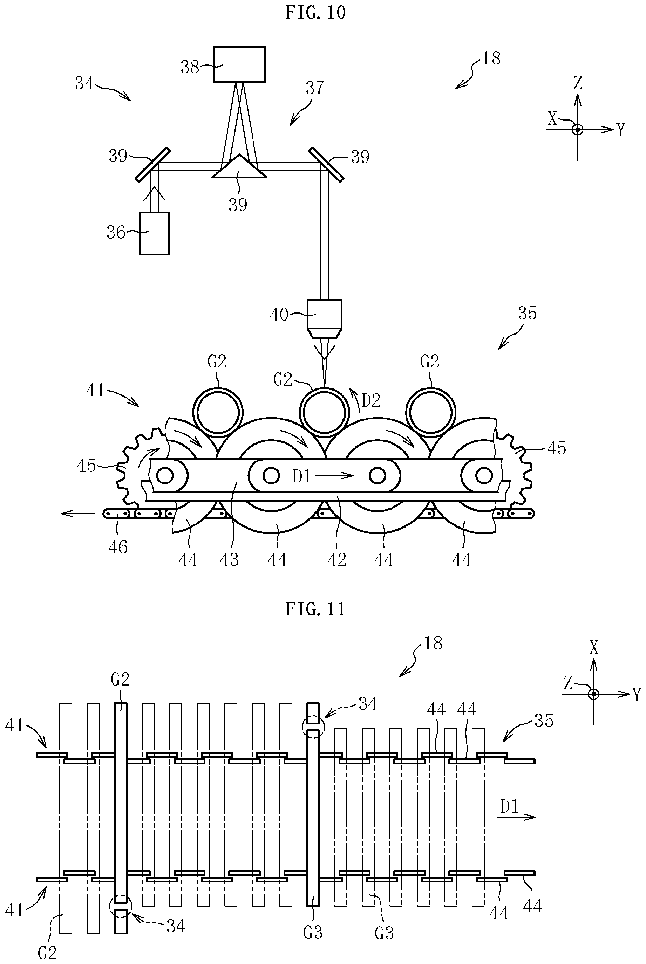

As illustrated in FIG. 10 and FIG. 11, the second cutting device 18 comprises crack forming devices 34 and a conveyance device 35. The crack forming devices 34 are configured to form cracks in the inside of the tube glass G2 that is obtained by cutting the continuous tube glass G1. The conveyance device 35 is configured to convey the tube glass G2.

As illustrated in FIG. 10, the crack forming device 34 has a configuration which is substantially the same as that of the inner crack region forming device 20 of the first cutting device 17. That is, the crack forming device 34 comprises a laser oscillator 36, an optical system 37, and a focal point adjusting portion 38. The laser oscillator 36 is capable of oscillating predetermined laser light (for example, pico-second pulse laser light or sub-pico-second pulse laser light) L. The optical system 37 is configured to cause the laser light L oscillated from the laser oscillator 36 to be condensed and enter the inside of the tube glass G2. The focal point adjusting portion 38 is capable of adjusting a position of a focal point of the laser light L in the inside of the tube glass G2. In this embodiment, the crack forming device 34 does not comprise the scanning portion 25 in the inner crack region forming device 20. However, the crack forming device 34 is not limited thereto. As a matter of course, the crack forming device 34 may comprise the scanning portion 25. As illustrated in FIG. 11, in order to cut both end portions of the tube glass G2, the second cutting device 18 comprises two crack forming devices 34.

Similarly to the optical system 24 of the first cutting device 17, the optical system 37 comprises a plurality of mirrors 39 and an objective lens 40. The objective lens 40 is configured to condense the laser light L transmitted through the plurality of mirrors 39 into the tube glass G2.

Similarly to the focal point adjusting portion 26 of the first cutting device 17, the focal point adjusting portion 38 comprises, for example, a spatial light phase modulator. With the focal point adjusting portion 38, a spatial phase distribution of the laser light L can be modulated so that the position of the focal point (position in the thickness direction of the tube glass G2) is adjusted with a phase hologram produced in advance in accordance with the irradiation direction of the laser light L.

The conveyance device 35 is configured to convey the tube glass G2 in a predetermined direction and also serves as a rotational drive device configured to cause the tube glass G2 to rotate about an axial center thereof (corresponding to the center line X1 of the continuous tube glass G1). The conveyance device 35 comprises a pair of endless roller chain composites 41. The conveyance device 35 conveys the tube glass G2, which is placed so as to extend over the pair of roller chain composites 41, in a direction orthogonal to the axial center of the tube glass G2 (lateral direction).

As illustrated in FIG. 10, each roller chain composite 41 comprises a pair of endless roller chains 43, a plurality of disc-shaped conveyance discs 44, sprockets 45, and an endless drive chain 46. The pair of roller chains 43 travel on a guide rail 42. The plurality of conveyance discs 44 are axially supported between the pair of roller chains 43 by roller shafts of the pair of roller chains 43 so as to be freely driven to rotate. The sprockets 45 are coaxially fixed to the respective conveyance discs 44. The drive chain 46 circulates in mesh with all of the sprockets 45.

Each conveyance disc 44 has a diameter which is larger than a pitch of the roller chains 43. The conveyance discs 44 are arranged alternately so that outer peripheral portions of the conveyance discs 44 partially overlap with each other in side view. With this, a trough is formed between the adjacent conveyance discs 44 in side view, and the tube glass G2 is stably placed in the trough. The conveyance device 35 causes the roller chains 43 to be circulated by a drive source (not shown) to allow the conveyance discs 44 to travel, to thereby convey each tube glass G2 in the direction orthogonal to the axial center direction of the tube glass G2 (in the direction indicated by the arrow D1).

Further, the conveyance device 35 causes the drive chains 46 to be circulated by another drive source (not shown) independently of the roller chains 43 to allow the conveyance discs 44 to rotate through the sprockets 45, to thereby cause each tube glass G2 to rotate about an axial center thereof (in the direction indicated by the arrow D2 in FIG. 10). With this, the conveyance device 35 is capable of causing the plurality of arrayed tube glasses G2 to continuously rotate about respective axial centers, and continuously conveying the plurality of tube glasses G2 in a direction orthogonal to the respective axial centers.

When end portions of the tube glass G2 are to be re-cut, the second cutting device 18 causes the tube glass G2 to be conveyed to a position below the crack forming device 34 (cutting position) . At this time, the second cutting device 18 stops conveyance of the tube glass G2 in the lateral direction by the conveyance device 35, and causes a crack C to be generated in the inside of the tube glass G2 by the crack forming device 34 while rotating the tube glass G2 by rotation of the conveyance discs 44. Through propagation of the crack C in the inside of the tube glass G2, the end portion of the tube glass G2 is cut (see FIG. 11).

Now, description is made of a manufacturing method for a tube glass product (G3) with use of the manufacturing apparatus 10 having the above-mentioned configuration.

First, as illustrated in FIG. 2, the continuous tube glass G1 sent from the tube drawing device 16 is conveyed further to the downstream side while being supported by the support portions 22 (see FIG. 1) from below. In this case, the first cutting device 17 configured to cut the continuous tube glass G1 to a predetermined length dimension is arranged on a downstream side of the tube drawing device 16, and the first cutting device 17 performs a rough cutting step (first cutting step).

In the rough cutting step, when the downstream-side end portion of the continuous tube glass G1 reaches a predetermined position (or a position immediately before the predetermined position), the downstream-side end portion of the continuous tube glass G1 is gripped by the gripping portion 31, and the gripping portion 31 is moved by the slide drive portion 32 toward the downstream side in the longitudinal direction. Then, the tensile force f1 in the direction along the center line X1 is applied to the continuous tube glass G1.

Further, the plurality of rollers 33 forming the bending force applying portion 30 are arranged on an upstream side of the gripping portion 31, and the predetermined bending force f2 is applied to the continuous tube glass G1 having passed between the plurality of rollers 33 so that the center line X1 is curved at a predetermined curvature. In this embodiment, the continuous tube glass G1 is curved at a predetermined curvature so that the irradiation side (upper right side of FIG. 2) of the laser light L described later becomes convex. With this, in the above-mentioned state, the tensile stress in directions separated from each other along the center line X1 is generated throughout the entire circumference of the continuous tube glass G1. In particular, on a large-diameter side of the curved portion of the continuous tube glass G1, the tensile stress in the directions separated from each other along the center line X1 is dominantly distributed.

Then, the inside of the continuous tube glass G1 is irradiated with the laser light L under a state in which the above-mentioned stress distribution is maintained. In this case, the inner crack region C1 including one or a plurality of cracks is formed through multiphoton absorption of the laser light L in the region irradiated with the laser light L by adjusting the irradiation condition (for example, a pulse width and an output) of the laser light L.

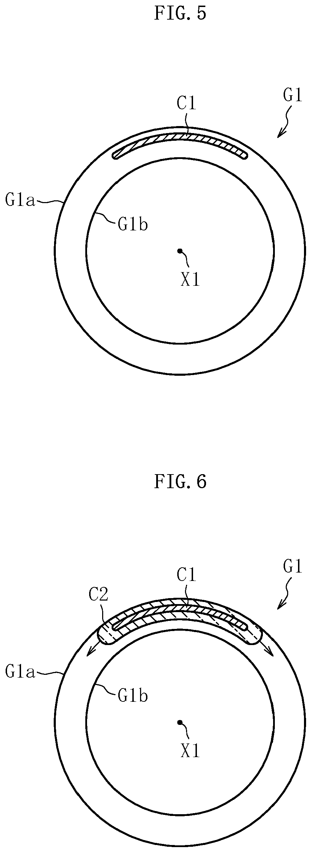

Further, in this case, the scanning portion 25 causes the laser light L to perform scanning in a predetermined locus (for example, a region from the focal point F to a focal point F' of FIG. 3), and the position of the focal point F of the laser light L is adjusted to be changed with the passage of time by the focal point adjusting portion 26. With this, the focal point F is moved along the circumferential direction at a predetermined position of the continuous tube glass G1 in the thickness direction thereof, to thereby form the inner crack region C1 having a predetermined circumferential dimension (see FIG. 5). In the example illustrated in FIG. 5, the inner crack region C1 having a band shape is formed around the center line X1 within a range of 45° or more and less than 90°.

The cracks in the inner crack region C1 are caused to propagate in the circumferential direction to cut the continuous tube glass G1. In this embodiment, the predetermined stress is generated in the inside of the continuous tube glass G1 at a time of irradiation with the laser light L. Therefore, when the inner crack region C1 is formed as described above, the cracks naturally propagate in directions separated from each other along the circumferential direction from both circumferential end portions of the inner crack region C1, and a crack propagation region C2 is enlarged along the circumferential direction (see FIG. 6).

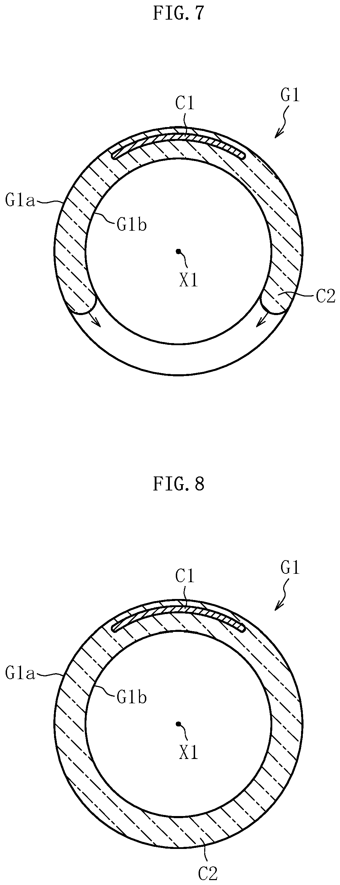

In this case, when the above-mentioned stress is applied to the continuous tube glass G1 by the crack propagation device 21 (tensile force applying portion 29 and bending force applying portion 30), as illustrated in FIG. 6, the crack propagation region C2 starts being enlarged in the directions separated from each other from both the circumferential sides of the inner crack region C1, and after that, as illustrated in FIG. 7, the crack propagation region C2 also continues to be enlarged at the same speed along the circumferential direction. As described above, the cracks continue to propagate (the crack propagation region C2 is enlarged) in a so-called symmetric manner, with the result that the right and left crack propagation regions C2 simultaneously reach a predetermined circumferential position (for example, a position directly facing a circumferential center position of the inner crack region C1 with the center line X1 interposed therebetween in FIG. 8) .

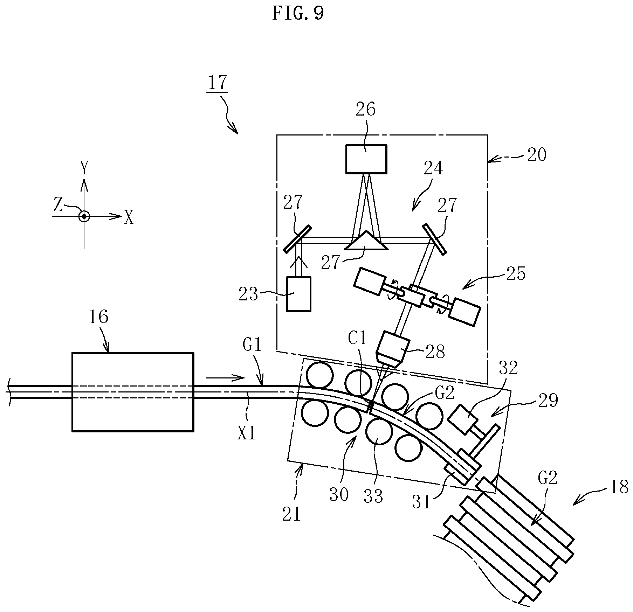

As a result, as illustrated in FIG. 8, the cracks in the inner crack region C1 are caused to propagate throughout the entire circumference and from the outer surface (outer peripheral surface) G1a to an inner surface (inner peripheral surface) G1b of the continuous tube glass G1 so that the continuous tube glass G1 is cut. Further, through the cutting, the tube glass G2 having a predetermined length dimension can be obtained as illustrated in FIG. 9.

Next, the second cutting device 18 performs a re-cutting step (second cutting step) with respect to end portions of the tube glass G2. In the re-cutting step, the tube glass G2 having been cut in the first cutting device 17 is received by the conveyance device 35 and is conveyed to a position below the crack forming device 34. After the tube glass G2 is conveyed to the position below the crack forming device 34 (position below the objective lens 40), the conveyance device 35 temporarily stops the conveyance, and causes the tube glass G2 to wait at that position while rotating the tube glass G2 by the conveyance discs 44.

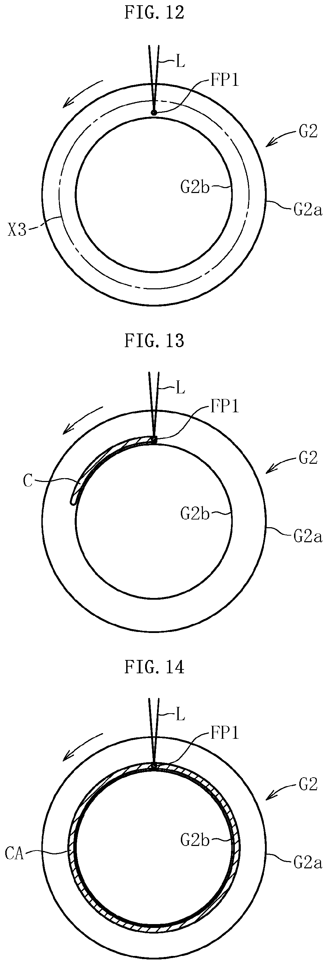

FIG. 12 to FIG. 15 are illustrations of one example of the re-cutting step (second cutting step) . The second cutting device 18 cuts the end portions of the tube glass G2 while moving a position of a focal point of the laser light L in the crack forming device 34 from a position on the inner surface G2b side to a position on the outer surface G2a side in the inside of the tube glass G2.

For example, as illustrated in FIG. 12, at the time of starting cutting, the crack forming device 34 sets the focal point of the laser light L to a position (hereinafter referred to as "first focal point position") FP1, which is set in the inside of the tube glass G2 at a preset cut portion and on the inner surface 2b side of the tube glass G2. As illustrated in FIG. 12, this first focal point position FP1 is set between a center line X3 in a thickness direction (or radial direction) of the tube glass G2 and the inner surface G2b of the tube glass G2. More preferably, it is desired that the first focal point position FP1 be set at a position as close as possible to the inner surface G2b of the tube glass G2 with respect to the center line X3 of the tube glass G2.

The tube glass G2 is rotated by the conveyance device 35 so as to be rotated in the direction indicated by the arrow in FIG. 13. With this rotation, the crack C generated by the laser light L radiated to the first focal point position FP1 is caused to propagate in the circumferential direction of the tube glass G2. During one rotation of the tube glass G2, the second cutting device 18 causes the laser light L to be condensed to the first focal point FP1, to thereby form the crack C through the multiphoton absorption. With this, as illustrated in FIG. 14, an annular crack (hereinafter referred to as "first crack") CA corresponding to a position of the focal point of the laser light L is formed.

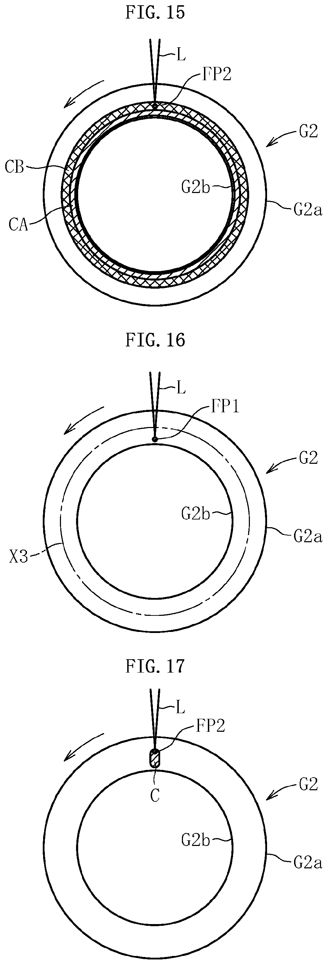

After that, as illustrated in FIG. 15, the crack forming device 34 moves the focal point of the laser light L to a position (hereinafter referred to as "second focal point position") FP2 on the outer surface G2a side with respect to the first focal point position FP1. During another one more rotation of the tube glass G2, the crack forming device 34 continuously radiates the laser light L at the second focal point position FP2, to thereby form an annular crack (hereinafter referred to as "second crack") CB as illustrated in FIG. 15. The second crack CB has a radius which is larger than that of the first crack CA, and is positioned on a radially outer side with respect to the first crack CA. After the second crack CB is formed, in the same manner, annular cracks such as a third crack (not shown) with a third focal point position and a fourth crack (not shown) with a fourth focal point position are sequentially formed toward the outer surface G2a side (toward the radially outer side). With this, the cracks are caused to propagate entirely along the thickness direction of the tube glass G2, thereby being capable of cutting the end portion of the tube glass G2. In this embodiment, a width of each of the cracks CA and CB may be, for example, about 0.1 mm. However, the width is not limited thereto. As illustrated in FIG. 11, both end portions of the tube glass G2 are cut (re-cut) by the two crack forming devices 34, and end surfaces of the tube glass G2 are subjected to mouth-burning processing (not shown), to thereby form the tube glass product G3 having a predetermined length dimension.

FIG. 16 to FIG. 19 are illustrations of another example of the re-cutting step. In this example, the mode of irradiation with the laser light L by the second cutting device 18 is different from that of the example illustrated in FIG. 12 to FIG. 15. As illustrated in FIG. 16 to FIG. 18, in this example, the cracks C each having a linear shape are formed along the thickness direction (or radial direction) of the tube glass G2 while rotating the tube glass G2. Specifically, as illustrated in FIG. 16, the crack forming device 34 adjusts the focal point of the laser light L to the first focal point position FP1 close to the inner surface G2b in the inside of the tube glass G2, and forms the crack C through the multiphoton absorption at the first focal point position FP1. After that, as illustrated in FIG. 16, the crack forming device 34 shifts the focal point of the laser light L to a second focal point position FP2 on the outer surface G2a side of the tube glass G2 with respect to the first focal point position FP1, and forms a crack C at the second focal point position FP2.

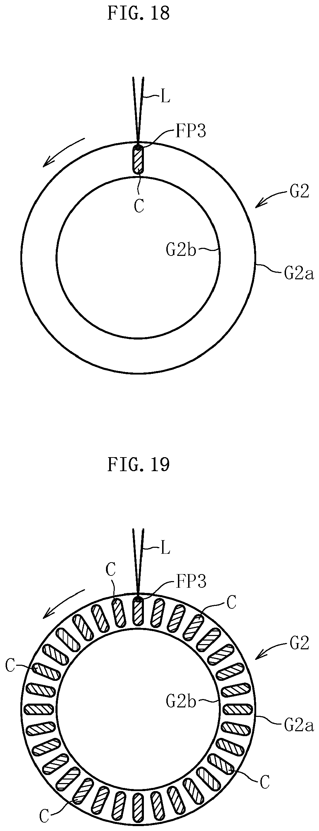

After that, the second cutting device 18 moves the focal point to a third focal point position FP3 on the outer surface G2a side with respect to the second focal point position FP2, and forms the crack C at the third focal point position FP3. As described above, through the movement of the position of the focal point from the first focal point position FP1 to the second focal point position FP2 and the third focal point position FP3 on the outer surface G2a side, the crack C having a linear shape as illustrated in FIG. 18 is formed in the tube glass G2. During one rotation of the tube glass G2, the crack forming device 34 repeats the formation of the crack C for a plurality of times. With this, as illustrated in FIG. 19, a plurality of cracks C are formed throughout the entire circumference in the inside of the tube glass G2. In the manner described above, an end portion of the tube glass G2 is cut during one rotation. Thus, in this example, the tube glass G2 can be cut at high speed. As illustrated in FIG. 11, both end portions of the tube glass G2 are cut so that the tube glass product G3 having a predetermined length dimension is completed.

For the formation of the cracks in the example of FIG. 16 to FIG. 19, it is desired that the laser light L (pulse laser light) be finely divided by an external modulator. Further, in this example, it is desired that a lens having a small focus depth be used. The frequency of the laser light L (pulse laser light) in this example is set to 50 kHz. However, the frequency is not limited thereto. In this embodiment, the frequency of the laser light L and the rotation speed (angular speed) of the tube glass G2 are adjusted so that the plurality of cracks C each having a linear shape can suitably be formed in the inside of the tube glass G2 at the preset cut portion.

In FIG. 19, there is given an illustration in which the cracks C are positioned at intervals. However, such illustration is merely schematic for easy understanding. In actuality, the cracks C are connected to each other through propagation and reach the outer surface G2a and the inner surface G2b of the tube glass G2, to thereby reliably cut the end portion of the tube glass.

With the manufacturing method for the tube glass product G3 (cutting method for the tube glass G2) by the manufacturing apparatus (second cutting device 18) according to the embodiment described above, the cracks C (CA and CB) are formed in the inside of the tube glass G2 through the multiphoton absorption that occurs when the laser light L is radiated from the crack forming device 34 of the second cutting device 18, and the position of the focal point of the laser light L (FP1 to FP3) is moved from the inner surface G2b side to the outer surface G2a side of the tube glass G2. With this, the cracks are caused to propagate in the inside of the tube glass G2, thereby being capable of cutting the tube glass G2.

In a case in which the cracks are to be caused to propagate by moving the position of the focal point from the outer surface G2a side to the inner surface G2b side in the inside of the tube glass G2, the cracks that are formed in advance at the position on the outer surface G2a side hinder transmission of the laser light when cracks are to be formed later at the position on the inner surface G2b side, with the result that propagation of the cracks becomes more difficult. In contrast, according to this embodiment, the position of the focal point of the laser light L (FP1 to FP3) is moved from the inner surface G2b side to the outer surface G2a side. Therefore, the cracks C (CA and CB) can be suitably caused to propagate with respect to the thickness direction of the tube glass G2.

Further, according to this embodiment, the cracks C (CA and CB) are generated in the inside of the tube glass G2. Therefore, unlike the related-art method, the tube glass G2 can be cut even without formation of the scratches by the cutting blade. With this, circumstances of related arts such as generation of glass powder at the time of cutting the tube glass G2 can be reliably prevented. With this, the labor of removing the glass powder by cleaning can be omitted, thereby being capable of reducing the number of required steps. Further, when the cut surface is formed as described above, as compared to the case in which cracks are forcibly generated and caused to propagate by cleaving or the like, the occurrence of cracking, chipping, and the like can be prevented to the extent possible to control the properties of the cut surface with relatively high accuracy, with the result that the satisfactory cut surface can be obtained stably. Thus, occurrence of defects caused by cracking and chipping can be prevented, and time required for mouth-burning processing for the end portions of the tube glass G2 can be significantly shortened, thereby being capable of efficiently manufacturing the tube glass product G3.

The present invention is not limited to the configuration of the above-mentioned embodiment. In addition, the present invention is not limited to the action and effect described above. The present invention may be modified in various forms within the range not departing from the spirit of the present invention.

In the above-mentioned embodiment, description is made of the example in which the tube glass G2 is rotated to cause the cracks C (CA and CB) to propagate throughout the entire circumference of the tube glass G2. However, the present invention is not limited thereto. For example, an annular crack may be caused to propagate in the inside of the tube glass G2 through scanning of the laser light L of the crack forming device 34 in the circumferential direction of the tube glass G2.

In the above-mentioned embodiment, description is made of the example in which the end portions of the tube glass G2 are cut in the re-cutting step. However, the present invention is not limited thereto. The halfway portion of the tube glass G2 can be cut in the re-cutting step.

### Reference Signs List

- 18: second cutting device (cutting device)
- 34: crack forming device
- 35: conveyance device (rotational drive device)
- FP1: focal point position
- FP2: focal point position
- FP3: focal point position
- G2: tube glass
- G2a: outer surface of tube glass
- G2b: inner surface of tube glass
- G3: tube glass product
- L: laser light

## Claims

1. A cutting method for a tube glass, comprising a crack forming step of forming a crack in an inside of the tube glass through multiphoton absorption that occurs in an irradiation region of laser light by irradiating the inside of the tube glass with the laser light having a focal point adjusted to the inside of the tube glass,
the crack forming step comprising moving a position of the focal point of the laser light from an inner surface side to an outer surface side in the inside of the tube glass, to thereby cause the crack to propagate in the inside of the tube glass.

2. The cutting method for a tube glass according to claim 1, wherein the crack forming step further comprises moving the position of the focal point of the laser light from the inner surface side to the outer surface side in the inside of the tube glass while rotating the tube glass about an axial center of the tube glass, to thereby cause the crack to propagate in the inside of the tube glass.

3. The cutting method for a tube glass according to claim 1 or 2, wherein the laser light comprises a pulse laser.

4. The cutting method for a tube glass according to claim 2, wherein the crack is annularly formed along with rotation of the tube glass.

5. The cutting method for a tube glass according to claim 2, wherein the crack is linearly formed along a thickness direction of the tube glass.

6. A cutting device for a tube glass, comprising a crack forming device which is configured to form a crack in an inside of the tube glass through multiphoton absorption that occurs in an irradiation region of laser light by irradiating the inside of the tube glass with the laser light having a focal point adjusted to the inside of the tube glass,
the crack forming device being configured to move a position of the focal point of the laser light from an inner surface side to an outer surface side in the inside of the tube glass, to thereby cause the crack to propagate in the inside of the tube glass.

7. The cutting device for a tube glass according to claim 6, further comprising a rotational drive device which is configured to rotate the tube glass.

8. The cutting device for a tube glass according to claim 6 or 7, wherein the laser light comprises a pulse laser.

9. Amanufacturingmethod for a tube glass product, comprising:
a first cutting step of cutting a continuous tube glass formed by tube drawing; and
a second cutting step of cutting an end portion of the tube glass which is formed after the first cutting step,
the second cutting step comprising a crack forming step of forming a crack in an inside of the tube glass through multiphoton absorption that occurs in an irradiation region of laser light by irradiating the inside of the tube glass with the laser light having a focal point adjusted to the inside of the tube glass,
the crack forming step comprising moving a position of the focal point of the laser light from an inner surface side to an outer surface side in the inside of the tube glass while rotating the tube glass about an axial center of the tube glass, to thereby cause the crack to propagate in the inside of the tube glass.
